# EUROPEAN PATENT SPECIFICATION

(11) **EP 3 766 733 B1**
(45) Date of publication and mention of the grant of the patent: **23.02.2022**
(21) Application number: 20186439.4
(22) Date of filing: 17.07.2020
(51) Int. Cl.: B60N 2/70, B60N 2/68

(54) **A CAR SEAT HAVING DISCRETE UPHOLSTERY AND RAPID COUPLING**
FAHRZEUGSITZ MIT DISKRETER POLSTERUNG UND SCHNELLKUPPLUNG
SIÈGE DE VOITURE DOTÉ D'UNE SELLERIE DISCRÈTE ET D'UN COUPLAGE RAPIDE

(30) Priority: 19.07.2019 IT 201900012327; 17.12.2019 IT 201900024229
(43) Date of publication of application: 20.01.2021
(73) Proprietor: Sabelt S.p.A., 10129 Torino (IT)
(72) Inventor: VERONESE, Diego, 10093 Collegno (TO) (IT); GUASTO, Davide, 10141 Torino (TO) (IT)
(74) Representative: Fioravanti, Corrado

(56) References cited:
- GB-A- 1 299 617
- GB-A- 2 565 214
- US-A- 3 861 747
- US-A1- 2013 169 019

## Description

### Background art

As is known, seats which have a composite structure, both monocoque seats and those having a separate seat and backrest, are particularly valued in sports cars for many reasons. For example, these seats have a total weight which is reduced with respect to traditional seats, and allow the car as a whole to be lightened, thus contributing to an overall improvement in the performance of said car. Moreover, seats having a structure of this kind are generally considered to be safer, as the structure forms a type of shell in which the driver is accommodated. More than any other aspect, however, a sports car driver values the overall rigidity of the seat, both as a result of the structure and because of the method of mounting said seat to the vehicle floor in a particularly rigid manner. This allows the driver to better perceive the movements of the car. Up to now, the upholstery of said seats is predominantly formed by integral seat covers.

However, these seats have several disadvantages, and in particular often force the driver to assume an uncomfortable driving position, above all if the driver has a particularly tall or small stature, or needs or prefers softer upholstery.

GB 2 565 214 A discloses a car seat according to the preamble of claim 1, which comprises a plurality of discrete upholstery elements which may be removably applied to the structure of the seat by means of rapid micro-hook (Velcro) coupling means. Hooking zones are provided which have micro-hooks projecting from the top surface of the seat and from the front surface of the backrest of the structure; the discrete upholstery elements each have a hooking region having micro-loops, in order to couple each upholstery element to the hooking region of the structure that has micro-hooks in a controllable and removable manner.

Another car seat with a cushion sitting portion detachable from the supporting portion is disclosed in US 2013/0169019 A1. The detachable sitting portion provides projecting members with a thinner shaft portion and a larger conical end portion which is removably inserted into a hole of a resilient member mounted to the supporting portion.

### Summary of the invention

The object of the present invention is that of providing a seat which has a structure comprising one or more composite structural shells, thus ensuring, in a stable and precise manner, a series of discrete upholstery elements which may be rapidly applied and detached and which may be shaped and arranged in a personalizable manner so as to satisfy the specific requirements of each single driver. A further intention is that of providing a seat to which discrete upholstery elements may be applied in a precise and stable manner even after repeated removal and remounting.

The above and other objects and advantages are achieved by a seat having a composite shell structure provided with discrete upholstery, according to independent claim 1. The dependent claims disclose variant embodiments.

In summary, a car seat comprises a structure which forms a seat and a backrest. Upholstery elements are removably associated with the seat in discrete regions of the seat and allow the shape of the seat to be adapted to the specific body features of the driver. Male coupling means are fixed in predetermined and spaced positions on the surface of the structure, and each have a pin having an enlarged head. Each upholstery element comprises a spongy body, an insert of rigid or semi-rigid consistency that is integral with the spongy body and has at least one through opening, and at least one female coupling element which is held in said through opening and has a concave housing configured to snap-fit and hold the enlarged head of a male coupling element in an elastically releasable manner.

### Brief description of the drawings

The features and advantages of a seat according to an embodiment of the present invention will become evident from the ensuing description, given by way of non-limiting example. Reference is made to the appended drawings, in which:
- Fig. 1 is a perspective front view of a seat having a single structural shell in a monocoque embodiment, to which discrete upholstery elements are applied;
- Fig. 2 is an enlarged partial cross-sectional view of a detail of the seat in Fig. 1;
- Fig. 3 is a perspective view of a female coupling element for mounting an upholstery element on a monocoque seat;
- Fig. 4 is a perspective front view of a seat having two structural shells, one for the seat and one for the backrest, to which discrete upholstery elements are applied.

### Detailed description

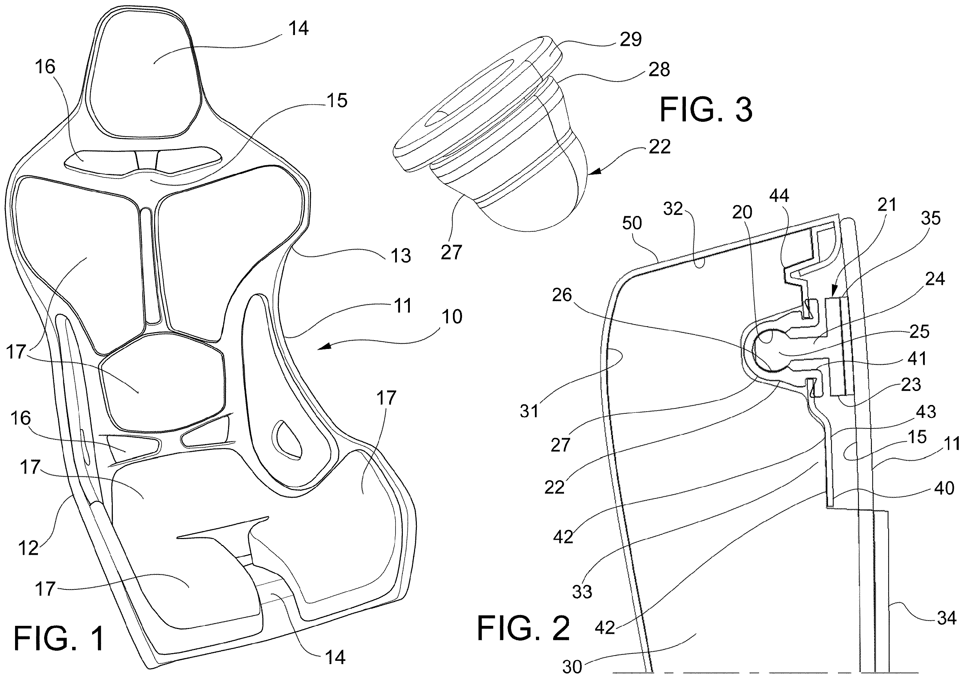

With initial reference to Fig. 1 to 3, reference sign 10 denotes, as a whole, a seat having a composite structure, which seat may be arranged in the interior compartment of a vehicle, in particular but not exclusively a sports or racing car. In the embodiment shown in Fig. 1, the seat 10 comprises a monocoque structure 11, i.e. a structure made in a single piece, which forms a seat 12 and a backrest 13. The seat 12 has an upper surface 14 and the backrest has a front surface 15. The structure 11 may have a series of through holes 16 for lightening and aeration.

The structure 11 may be made of a rigid and light material, for example a carbon fiber composite material. Alternatively, other materials may be used, for example glass fiber or mixed glass and carbon fibers, or thermoplastic materials.

The seat 10 comprises a plurality of discrete and removable upholstery elements 17.

Each upholstery element 17 is removably but firmly held on the structure 11 by a plurality of quick snap-fit coupling means, which comprise male coupling elements 21 applied to the upholstery elements 17 and female coupling elements 22 which are integral with the structure 11.

Each male coupling element 21 is made of plastics material, and comprises a transparent or at least partially transparent base 23 and a pin 24 having an enlarged head 25, which in this example is a head 25 having a spherical shape.

The male coupling elements 21 are fixed in predetermined and spaced positions on the upper surface 14 of the seat and on the front surface 15 of the backrest of the structure 11.

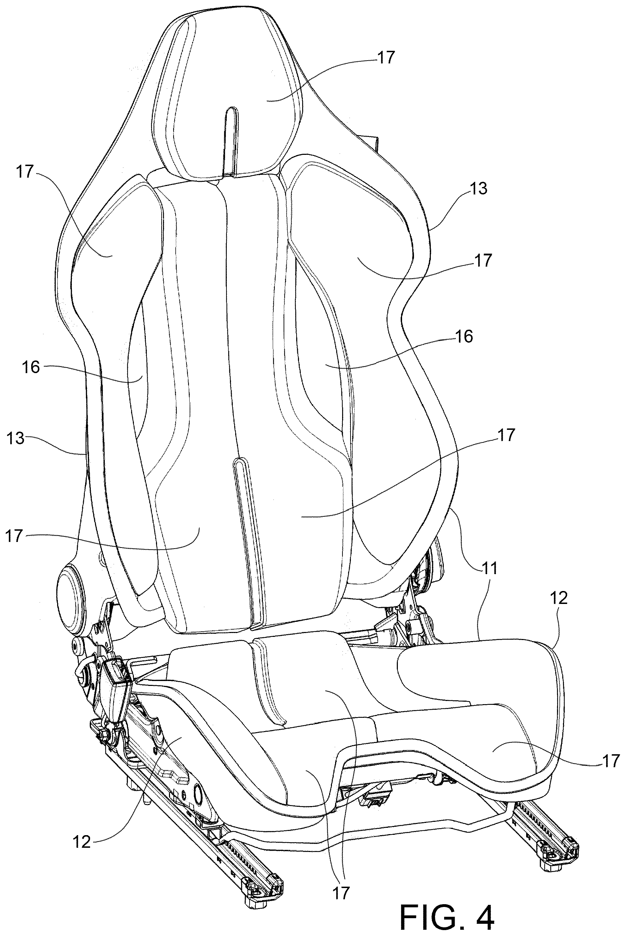

The female coupling elements 22 have a body which is made of a resiliently yielding material and is substantially in the shape of a bell, which has an internal surface 26 and an external surface 27. The internal surface forms a partially spherical concave housing 20 which is dimensioned so as to receive and hold one of the enlarged heads 25 of a male coupling element 21 in an elastically releasable manner with a predetermined force. The external surface 27 has at least one recess 28 formed in a continuous or discrete manner around the female coupling element 22. The female coupling element 22 preferably forms an outer flange 29 (Fig. 4). The elasticity and deformability of the female coupling elements 22 may be controlled, during the manufacturing process, by increasing or reducing the percentage of an elastomeric component.

A first step of the method for assembling the discrete upholstery includes fixing the male coupling elements 21 onto the structure 11. According to one preferred embodiment, the fixing is carried out by means of applying a polymerizable adhesive 35 to the interface between the bases 23 of the elements 21 and predetermined regions of the upper surface 14 of the seat and of the front surface 15 of the backrest of the structure 11. Then, in accordance with procedures known per se in the art, pulsed ultraviolet light is irradiated through the transparent or at least partially transparent bases 23, thus obtaining the polymerization of the adhesive 35. This process, which may use single-component or two-component adhesives, may cause the adhesive to achieve approximately 80% of its performance in terms of solidification after just 7 seconds from the application of the UV light, and therefore 100% after 45 minutes. The rapid and almost complete polymerization of the adhesive advantageously makes it possible to be able to easily and instantly manipulate the structure after the application of the UV light, without running the risk of the male coupling elements 21 becoming detached.

Each discrete upholstery element 17 comprises an internal body 30 which has a spongy consistency and is made by means of injecting polyurethane foam, and one or more inserts 40 having a rigid or semi-rigid consistency, preferably in the form of sheets or plates made of thermoformable plastics material. Each spongy body 30 adheres to a relevant surface 42 of an insert 40. Each insert 40 has at least one through opening 41 which is adapted to receive a relevant female coupling element 22. Each female element 22 is forcibly inserted into a relevant through opening 41 of an insert 40 such that the recess 28 receives and holds the edge of the opening 41.

Each insert 40 has an internal surface 42 which adheres to the spongy body 30, and an opposing external surface 43 which faces the structure 11.

The insert 40 preferably has a non-planar shape, for example having one or more depressions or ridges 44, in order to create a non-planar interface surface (the surface 42) with the spongy body 30, in order to encourage a stronger coupling to the body 30 and counteract relative movements between the insert and the spongy body.

According to an embodiment, the adhesion between the insert 40 and the spongy body 30 is obtained by injection overmolding the spongy body on the insert. The insert is placed in a mold (not shown) where the foam injection is carried out such that the spongy body 30, once formed, adheres to the internal surface 42 of the insert 40. The female elements 22 are preferably applied in the openings 41 of the insert before the phase of overmolding the spongy body 30.

According to an alternative embodiment, the spongy body 30 is molded separately and subsequently joined to the insert 40 by applying an adhesive to the interface surface 42 of the insert 40. In this variant, the application of the insert 40 and the female elements 22 locally elastically deforms and compresses the surface 32 of the spongy body that faces the structure 11. Purely by way of example, the insert may be selected from sheets of thermoformable plastics material having a thickness of between approximately 1.5 mm and approximately 2.5 mm, with a volumetric mass of between approximately 400 g/dm³ and approximately 900 g/dm³.

The upholstery elements 17 comprise an external covering 50, for example made of fabric, natural or artificial leather or another thin and flexible material, which covering covers the surface 31 of the spongy body that, in use, is exposed and faces the driver (or passenger) and the side surfaces 32 of the spongy body 30. It is preferable for the external covering to also extend onto the side surfaces 32 of the spongy body 30; this is because the side surfaces of the upholstery elements, spaced apart from one another, are also visible in use conditions.

As shown schematically in Fig. 2, the covering 50 is preferably joined to an edge region of the insert 40, so as to wrap and contain the spongy body 30 of the insert 40. The external covering 50 may be joined to the insert 40 by means of stapling or stitching or by using an adhesive. Alternatively, a removable micro-hook (Velcro) fixing system may be provided.

A complete upholstery element 17 comprises the external covering 50, the spongy body 30, one or more inserts 40 and female elements 22 applied in the openings 41 of the insert 40. The upholstery element 17 may therefore be quickly mounted onto the structure 11, by coupling the female coupling elements 22 to the male coupling elements 21 fixed to the surfaces 12 and 13 of the structure.

Preferably, the seat has a limited region of surface contact between the spongy body 30 and the surface of the structure 11, in order to reduce the friction between two different materials, respectively the polyurethane foam and the composite material, and the noise resulting therefrom. For this purpose, the surface of the spongy body 30 that faces the structure 11 when in use forms at least one recessed area 33 which does not come into contact, in the mounted state, with the surface of the monocoque structure.

Advantageously, the recessed area 33 is formed around a zone adapted to receive the female elements 22 and comprises the surface against which the insert 40 is applied. One or more areas 34 of the surface 32 are not recessed and are designed to come into contact, in an elastically compressed state, against the composite structure. In Fig. 2, the area 34 is shown in its non-deformed state prior to being placed in contact and compressed against the structure 11.

According to an embodiment shown in Fig. 4, the structure 11 is formed by two separate structural shell elements, one forming the backrest 13 and one forming the seat 12. The structural shell element which forms the backrest 13 is hingedly mounted, in accordance with a procedure known *per se,* to the structural element 12 of the seat, so as to have the possibility of controlling the angle of inclination of the backrest.

As can be appreciated, a seat according to the present invention entails rapid assembly times, allows the upholstery elements to be precisely arranged on the seat in positions predetermined in the design phase, and offers the possibility of personalizing the shape and arrangement of the upholstery elements. The steady coupling between the various components of the single upholstery elements and the male coupling elements fixed on the structure provides an optimal stability and setup for the driver.

Various aspects and embodiments of the seat have been described. It is understood that each embodiment may be combined with any other embodiment. Moreover, the solution is not limited to the embodiments described, but may be varied within the scope defined by the appended claims.

## Claims

1. A car seat, comprising:
a seat structure (11) comprising a single structural shell or two structural shells forming a seat (12) with an upper surface (14) and a backrest (13) with a front surface (15),
a plurality of discrete upholstery elements (17) removably applicable to said surfaces (14, 15),
quick coupling means (21, 22) distributed on said surfaces (14, 15) and on the upholstery elements (17) for removably coupling the upholstery elements to the seat structure (11);
**characterized in that**
the quick coupling means comprise male coupling means (21), fixed in predetermined and spaced positions on said surfaces (14, 15), and each having a pin (24) with an enlarged head (25);
each upholstery element (17) comprises a spongy body (30), an insert (40) of rigid or semi-rigid consistency (40) integral with the spongy body and having at least one through opening (41), and at least one female coupling element (22) which is held in said through opening (41) and has a concave housing (20) configured to snap-fit and hold in an elastically releasable manner the enlarged head (25) of a male coupling element (21).

2. A car seat according to claim 1, wherein said insert (40) is a sheet or plate having a non-flat shape (44).

3. A car seat according to claim 1 or 2, wherein said insert (40) is a sheet or plate of thermoformable material.

4. A car seat according to claim 1 or 2 or 3, wherein each spongy body (30) adheres to a surface (42) of the insert (40).

5. A car seat according to any one of the preceding claims, wherein each male coupling element (21) comprises an at least partially transparent base (23), and that said base is integral with the seat structure (11) by means of an adhesive (35) polymerizable with ultraviolet light and applied to the interface between the base (23) and an area of the upper surface (14) of the seat (12) or of the front surface (15) of the backrest (13).

6. A car seat according to any one of the preceding claims, wherein the spongy body has, on one side facing the seat structure (11)
at least one recessed area (33), which does not come into contact with the seat structure, said receding area (33) being formed around a zone adapted to receive one of the female coupling elements (22), and
one or more non-recessed areas (34), configured to come into contact, in an elastically compressed condition, against the seat structure (11).

7. A car seat according to any one of the preceding claims, wherein the upholstery elements (17) each comprise a covering (50) in fabric or leather or similar flexible material which covers a surface (31) of the spongy body (30) which surface in use is facing the driver and side surfaces (32) of the sponge body (30), the covering (50) being joined to the insert (40).

8. A car seat according to any one of the preceding claims, wherein the spongy body (30) is overmolded on one side (42) of the insert (40).

9. A car seat according to any one of the preceding claims, wherein the structure (11) is composed of a single structural monocoque shell that forms both the seat (12) and the backrest (13).

10. A car seat according to any of claims 1 to 8, wherein the structure (11) is composed of two separate structural shells mounted one to the other, of which a first structural shell (12) forms the seat and a second structural shell (13) forms the backrest.

## Patentansprüche

1. Fahrzeugsitz mit:
einer Sitzstruktur (11), die eine einzelne strukturelle Schale oder zwei strukturelle Schalen, die einen Sitz (12) mit einer oberen Oberfläche (14) und eine Rückenlehne (13) mit einer vorderen Oberfläche (15) ausbildet/ausbilden, aufweist,
einer Mehrzahl diskreter Polsterungselemente (17), die entfernbar an besagten Oberflächen (14, 15) anbringbar sind,
Schnellkopplungsmitteln (21, 22), die auf besagten Oberflächen (14, 15) und auf den Polsterungselementen (17) verteilt sind, zum entfernbaren Koppeln der Polsterungselemente an die Sitzstruktur (11);
**dadurch gekennzeichnet, dass**
die Schnellkopplungsmittel männliche Kopplungsmittel (21) aufweisen, die in vorbestimmten und beabstandeten Positionen auf besagten Oberflächen (14, 15) befestigt sind und die jeweils einen Stift (24) mit einem vergrößerten Kopf (25) aufweisen;
jedes Polsterungselement (17) einen schwammartigen Körper (30), einen Einsatz (40) starrer oder halbstarrer Konsistenz (40) integral mit dem schwammartigen Körper, und der mindestens eine Durchgangsöffnung (41) aufweist, und mindestens ein weibliches Kopplungselement (22), das in besagter Durchgangsöffnung (41) gehalten wird und ein konkaves Gehäuse (20) aufweist, das dazu ausgebildet ist, den vergrößerten Kopf (25) eines männlichen Kopplungselements (21) in einer elastisch lösbaren Weise zu verclipsen und zu halten, aufweist.

2. Fahrzeugsitz nach Anspruch 1, bei dem besagter Einsatz (40) ein Blech oder eine Platte ist, das/die eine nicht flache Form (44) aufweist.

3. Fahrzeugsitz nach Anspruch 1 oder 2, bei dem besagter Einsatz (40) ein Blech oder eine Platte thermoformbaren Materials ist.

4. Fahrzeugsitz nach Anspruch 1 oder 2 oder 3, bei dem jeder schwammartige Körper (30) an einer Oberfläche (42) des Einsatzes (40) haftet.

5. Fahrzeugsitz nach einem der vorhergehenden Ansprüche, bei dem jedes männliche Kopplungselement (21) eine zumindest teilweise transparente Basis (23) aufweist, und dass besagte Basis mittels eines Haftmittels (35), das mit ultraviolettem Licht polymerisierbar ist und auf die Übergangsfläche zwischen der Basis (23) und einem Bereich der oberen Oberfläche (14) des Sitzes (12) oder der vorderen Oberfläche (15) der Rückenlehne (13) aufgetragen ist, integral mit der Sitzstruktur (11) ist.

6. Fahrzeugsitz nach einem der vorhergehenden Ansprüche, bei dem der schwammartige Körper, auf einer Seite, die der Sitzstruktur (11) zugewandt ist,
mindestens einen vertieften Bereich (33), der mit der Sitzstruktur nicht in Kontakt kommt und um eine Zone, die dazu angepasst ist, eines der weiblichen Kopplungselemente (22) aufzunehmen, herum ausgebildet ist, und
einen oder mehr nicht vertiefte Bereiche (34), die dazu ausgebildet sind, in einem elastisch komprimierten Zustand gegen die Sitzstruktur (11) in Kontakt zu kommen, aufweist.

7. Fahrzeugsitz nach einem der vorhergehenden Ansprüche, bei dem die Polsterungselemente (17) jeweils eine Abdeckung (50) in Stoff oder Leder oder ähnlichem flexiblem Material aufweisen, die eine Oberfläche (31) des schwammartigen Körpers (30), die bei Verwendung dem Fahrer zugewandt ist, und seitliche Oberflächen (32) des schwammartigen Körpers (30) bedeckt und die mit dem Einsatz (40) verbunden ist.

8. Fahrzeugsitz nach einem der vorhergehenden Ansprüche, bei dem der schwammartige Körper (30) auf einer Seite (42) des Einsatzes (40) umspritzt ist.

9. Fahrzeugsitz nach einem der vorhergehenden Ansprüche, bei dem die Struktur (11) aus einer einzelnen strukturellen Monocoque-Schale, die sowohl den Sitz (12) als auch die Rückenlehne (13) ausbildet, besteht.

10. Fahrzeugsitz nach einem der Ansprüche 1 bis 8, bei dem die Struktur (11) aus zwei separaten strukturellen Schalen, die aneinander montiert sind, besteht, von denen eine erste strukturelle Schale (12) den Sitz ausbildet und eine zweite strukturelle Schale (13) die Rückenlehne ausbildet.

## Revendications

1. Siège de voiture, comprenant :
une structure de siège (11) comprenant une enveloppe structurale unique ou deux enveloppes structurales formant un siège (12) ayant une surface supérieure (14) et un dossier (13) ayant une surface avant (15),
une pluralité d'éléments de sellerie (17) discrets applicables de manière amovible sur lesdites surfaces (14, 15),
des moyens de couplage rapide (21, 22) répartis sur lesdites surfaces (14, 15) et sur les éléments de sellerie (17) pour coupler de manière amovible les éléments de sellerie à la structure de siège (11) ;
**caractérisé en ce que**
les moyens de couplage rapide comprennent des moyens de couplage mâles (21), fixés dans des positions prédéterminées et espacées sur lesdites surfaces (14, 15), et ayant chacun une broche (24) ayant une tête élargie (25) ;
chaque élément de sellerie (17) comprend un corps spongieux (30), un insert (40) de consistance rigide ou semi-rigide (40) d'un seul tenant avec le corps spongieux et ayant au moins une ouverture traversante (41), et au moins un élément de couplage femelle (22) qui est maintenu dans ladite ouverture traversante (41) et a un logement concave (20) configuré pour s'encliqueter et maintenir d'une manière élastiquement libérable la tête élargie (25) d'un élément de couplage mâle (21).

2. Siège de voiture selon la revendication 1, dans lequel ledit insert (40) est une feuille ou une plaque ayant une forme non plate (44).

3. Siège de voiture selon la revendication 1 ou 2, dans lequel ledit insert (40) est une feuille ou une plaque de matériau thermoformable.

4. Siège de voiture selon la revendication 1 ou 2 ou 3, dans lequel chaque corps spongieux (30) adhère à une surface (42) de l'insert (40).

5. Siège de voiture selon l'une quelconque des revendications précédentes, dans lequel chaque élément de couplage mâle (21) comprend une base (23) au moins partiellement transparente, et cette dite base est d'un seul tenant avec la structure de siège (11) au moyen d'un adhésif (35) polymérisable avec une lumière ultraviolette et appliqué sur l'interface entre la base (23) et une région de la surface supérieure (14) du siège (12) ou de la surface avant (15) du dossier (13).

6. Siège de voiture selon l'une quelconque des revendications précédentes, dans lequel le corps spongieux a, sur un côté faisant face à la structure de siège (11)
au moins une région en retrait (33), qui ne vient pas en contact avec la structure de siège, ladite région en retrait (33) étant formée autour d'une zone adaptée pour recevoir l'un des éléments de couplage femelles (22), et
une ou plusieurs régions sans retrait (34), configurées pour venir en contact, dans un état élastiquement comprimé, contre la structure de siège (11).

7. Siège de voiture selon l'une quelconque des revendications précédentes, dans lequel les éléments de sellerie (17) comprennent chacun une couverture (50) en tissu ou en cuir ou en matériau souple similaire qui recouvre une surface (31) du corps spongieux (30), laquelle surface en cours d'utilisation est face au conducteur et aux surfaces latérales (32) du corps spongieux (30), la couverture (50) étant reliée à l'insert (40).

8. Siège de voiture selon l'une quelconque des revendications précédentes, dans lequel le corps spongieux (30) est surmoulé sur un côté (42) de l'insert (40).

9. Siège de voiture selon l'une quelconque des revendications précédentes, dans lequel la structure (11) est composée d'une enveloppe structurale monocoque unique qui forme à la fois le siège (12) et le dossier (13).

10. Siège de voiture selon l'une quelconque des revendications 1 à 8, dans lequel la structure (11) est composée de deux enveloppes structurales séparées montées l'une sur l'autre, dont une première enveloppe structurale (12) forme le siège et une seconde enveloppe structurale (13) forme le dossier.
